Europäisches Patentamt

European Patent Office

Office européen des brevets

(11) Veröffentlichungsnummer: **0 368 380**
**A1**

(12) **EUROPÄISCHE PATENTANMELDUNG**

(21) Anmeldenummer: **89202680.8**

(22) Anmeldetag: **24.10.89**

(51) Int. Cl.5: **C01G 37/00, C01G 39/00, C01G 41/00**

(30) Priorität: **10.11.88 AT 2751/88**

(43) Veröffentlichungstag der Anmeldung:
**16.05.90 Patentblatt 90/20**

(84) Benannte Vertragsstaaten:
**DE FR GB IT NL**

(71) Anmelder: **METALLWERK PLANSEE GESELLSCHAFT M.B.H.**

**A-6600 Reutte, Tirol(AT)**

(72) Erfinder: **Krismer, Robert**
**Nr. 124**
**A-6621 Bichlbach(AT)**
Erfinder: **Ortner, Hugo, Dr.**
**Hofweg 21**
**A-6600 Höfen(AT)**
Erfinder: **Wilhartitz, Peter, Dr.**
**Unterried 33**
**A-6600 Ehenbichl(AT)**

(74) Vertreter: **Lohnert, Wolfgang, Dr.**
**Metallwerk Plansee GmbH**
**A-6600 Reutte, Tirol(AT)**

(54) **Verfahren zur Reinigung einer wässrigen Alkali- oder Ammoniummetallatlösung einschliesslich deren Isopolyanionen der Metalle Chrom, Molybdän oder Wolfram.**

(57) Die Erfindung betrifft ein Verfahren zur Reinigung einer wäßrigen Alkali-oder Ammoniummetallatlösung, einschließlich deren Isopolyanionen der Metalle Chrom oder Molybdän oder Wolfram. Die Verunreinigungen werden dabei zuerst durch Einstellen eines geeigneten pH-Wertes in kationische Form und in Form von schwerlöslichen Hydroxiden gebracht. Dann wird die verunreinigte Lösung mit einer faserförmigen kationenabsorbierenden Substanz, vorzugsweise Zellulose mit chelatbildenden Gruppen, versetzt und bis zur Einstellung des Gleichgewichtszustandes gerührt. Anschließend wird die Lösung zur Abscheidung der mit den Verunreinigungen behafteten festen Substanz filtriert. Nötigenfalls werden nach Überprüfung des eingestellten pH-Wertes die nachfolgenden Verfahrensschritte ein- oder mehrmals wiederholt.

Fig.1

# VERFAHREN ZUR REINIGUNG EINER WÄSSRIGEN ALKALI- ODER AMMONIUMMETALLATLÖSUNG EINSCHLIESSLICH DEREN ISOPOLYANIONEN DER METALLE CHROM ODER MOLYBDÄN ODER WOLFRAM

Von Verunreinigungen gereinigte Alkali- und Ammoniummetallatlösungen einschließlich deren Isopolyanionen der Metalle Chrom, Molybdän oder Wolfram sind von großer Bedeutung zur Gewinnung von hochreinem metallischem Chrom, Molybdän oder Wolfram.

In der Vergangenheit sind eine Reihe von Verfahren und Reinigungstechniken vorgeschlagen worden, die im Zuge der Erzaufbereitung unvermeidlichen Verunreinigungen von den Nutzmetallen bzw. Nutzmetallösungen trennen.

Eine dieser Reinigungstechniken ist die mehrfache Umkristallisation von Zwischenprodukten wie Kaliumdichromat, Ammoniumparawolframat oder Ammoniumdimolybdat. Die DE-PS 27 22 615 beschreibt beispielsweise die mehrfache Umkristallisation von Ammoniumdimolybdat. Die DE-OS 36 01 304 beschreibt die Herstellung eines hochreinen Ammoniumparawolframates, bei dem das Nutzmetall schließlich durch Zugabe eines Hexamethylentetramins ausgefällt wird.

Nachteilig bei dieser Art von Reinigungstechnik ist die Mitfällung von Verunreinigungen, die im Kristallgitter miteingebaut werden und damit schwer abreicherbar sind.

Eine weitere wichtige Reinigungstechnik ist die Extraktion der Nutzmetalle oder Nutzmetallverbindungen in eine organische flüssige Phase, wobei die Verunreinigungen in der wäßrigen Phase zurückbleiben. Die DE-OS 28 34 452 beschreibt beispielsweise die Herstellung einer hochreinen Ammoniumparawolframat-Lösung auf diese Weise. Entsprechend der DE-PS 29 29 952 werden Wolframionen aus einer verunreinigten wäßrigen Alkalimetallolframat-Lösung mit Hilfe von Triisooktylamin als Extraktionsmittel extrahiert. Die DE-OS 28 52 198 beschreibt die Gewinnung von hochreinem Chromoxid mit Hilfe dieser Reinigungstechnik.

Der Nachteil bei dieser Reinigungstechnik liegt darin, daß sich bei jeder Flüssig-Flüssig-Extraktion ein bestimmtes Verteilungsgleichgewicht einstellt, wodurch die Abreicherungsmöglichkeit der Verunreinigungen beschränkt ist. Um daher hochreine Nutzmetalle bzw. Nutzmetallverbindungen zu erhalten, müssen die Verfahrensschritte zur Reinigung oftmals wiederholt werden.

Eine dritte bedeutende Methode der Reinigung ist schließlich die Abtrennung der Nutzmetalle in anionischer Form aus wäßrigen Lösungen durch anionenabsorbierende Festphasen oder Anionentauscher. Die DE-AS 23 45 673 beschreibt beispielsweise ein Verfahren zur Herstellung von hochreinem Molybdäntrioxid, wo Aktivkohle als anionenabsorbierende Festphase eingesetzt wird. Entsprechend der DE-AS 28 01 067 wird zur Herstellung von reinem Ammoniumheptamolybdat ein Anionenaustauscherharz eingesetzt. Vielfach wird bei diesen Reinigungstechniken nach Durchlaufen des Anionenaustauschschrittes noch eine kationische Nachreinigung der Lösung vorgenommen. Die DE-AS 25 58 160 beschreibt eine derartige Reinigungstechnik zur Gewinnung eines hochreinen Ammoniummolybdats, wo zur kationischen Nachreinigung ein chelatbildendes Kationenaustauscherharz verwendet wird.

Die Nachteile bei dieser Methode der Reinigung liegen darin, daß im Anionenaustauschschritt eine sehr große Kapazität des Anionentauschermediums verlangt wird, da ja das Nutzmetall zurückgehalten werden soll. Der Kationenaustauschschritt kann nicht als einziger Reinigungsschritt eingesetzt werden. Er kann nur dem Anionenaustauschschritt nachgeschaltet sein, da sonst die spezifische Kapazität der bekannten Kationentauscher zur Aufnahme der Verunreinigungen zu gering ist. Darüberhinaus ist bei dieser Reinigungsmethode eine aufwendige Optimierung der Strömungsverhältnisse notwendig, um gute Ausbeuten zu erzielen.

Kennzeichnend für alle bisher bekannten Reinigungstechniken ist, daß die Verfahren technisch aufwendig und daher kostspielig sind. Darüberhinaus ist die Einsetzbarkeit der Verfahren sowohl für Chrom als auch für Molybdän und Wolfram als Nutzmetalle problematisch, da sie in Abhängigkeit von dem betroffenen Nutzmetall in der Regel sehr unterschiedlicher Verfahrensbedingungen bedürfen.

Aufgabe der vorliegenden Erfindung ist es, ein wesentlich vereinfachtes Verfahren zur Reinigung einer wäßrigen Alkali- oder Ammoniummetallatlösung, einschließlich deren Isopolyanionen, von Verunreinigungen zu schaffen, wobei diese durch Einstellen eines geeigneten pH-Wertes in kationische Form und in Form von schwerlöslichen Hydroxiden gebracht und dann abgetrennt werden, das ohne wesentliche Änderung des Verfahrens gleichermaßen gut, sowohl für die Nutzmetalle Chrom, Molybdän als auch Wolfram anwendbar ist und bei dem die Abtrennung der Verunreinigungen in kationischer Form und in Form schwerlöslicher Hydroxide gleichzeitig ohne Vorschalten eines Filtrations-oder Anionenaustauschschrittes durchgeführt werden kann.

Erfindungsgemäß wird dies dadurch erreicht, daß die verunreinigte Lösung mit einer faserförmigen kationenabsorbierenden Substanz versetzt und bis zur Einstellung des Gleichgewichtszustandes gerührt wird und daß die Lösung anschließend zur Abscheidung der mit den Verunreinigungen behafteten festen Substanz filtriert wird, wobei wahlweise diese Schritte ein- oder mehrmals wiederholt werden.

Durch die Zugabe einer faserförmigen kationenabsorbierenden Substanz zur verunreinigten Lösung wird auf einfache Weise erreicht, daß die Verunreinigungen, die in kationischer Form und in Form von schwerlöslichen Hydroxiden in der wäßrigen Lösung vorhanden sind, gleichzeitig durch Absorption der Kationen und durch Adsorption der schwerlöslichen Hydroxide von der Substanz aufgenommen werden. Die Abtrennung der Verunreinigungen von der wäßrigen Lösung erfolgt wiederum gleichzeitig durch einfaches Abfiltrieren der faserförmigen Substanz.

Schon bei einer einmaligen Durchführung dieser Schritte lassen sich ohne weitergehende Reinigungsschritte hochreine wäßrige Alkali- oder Ammoniummetallatlösungen, einschließlich deren Isopolyanionen, der Metalle Chrom oder Molybdän oder Wolfram erzielen, die in ihrer Reinheit für die meisten Verwendungszwecke voll ausreichen. Soll die Reinheit für spezielle Verwendungen noch weiter gesteigert werden, kann dies durch ein- oder mehrmalige Wiederholung der Verfahrensschritte erreicht werden. Ein weiterer Vorteil des speziellen Reinigungsverfahrens liegt darin, daß es ohne wesentliche Verfahrensänderungen, lediglich durch Anpassung des pH-Wertes, sowohl für Chrom als auch Molybdän und Wolfram als Nutzmetalle angewendet werden kann.

In einer besonders vorteilhaften Ausgestaltung des Verfahrens wird als faserförmige kationenabsorbierende Substanz Zellulose mit chelatbildenden Gruppen verwendet.

Durch die chelatbildenden Gruppen wird eine besonders gute kationenabsorbierende Wirkung der Zellulose erreicht. Zellulose Hyphan der Firma Riedel de Häen ist beispielsweise eine derartige Zellulose mit chelatbildenden Gruppen, die sich für das erfindungsgemäße Verfahren hervorragend bewährt hat.

Reine Zellulose ohne chelatbildende Gruppen ist ebenfalls geeignet. Da die kationenabsorbierende Wirkung gegenüber Zellulose mit chelatbildenden Gruppen jedoch wesentlich geringer ist, kann nicht für alle Elemente die gleich hohe Reinheit erreicht werden.

In einer weiteren bevorzugten Ausgestaltung der Erfindung wird das Verfahren in einer einzigen Stufe durchgeführt, wobei die wäßrige Lösung auf einen pH-Wert zwischen 10 und 12,5 eingestellt wird und der eingestellte pH-Wert auch bei einer wahlweisen Wiederholung der Verfahrensschritte auf diesen Wert eingestellt bleibt.

Die Durchführung des Verfahrens als einstufiges Verfahren ist insbesondere dann ausreichend, wenn man weiß, daß gewisse Verunreinigungen wie P, Al, Nb, V oder Ta nicht oder nur in zulässigem Maß in der verunreinigten Lösung vorhanden sind.

In einer anderen vorteilhaften Ausgestaltung der Erfindung wird das Verfahren in zwei Stufen durchgeführt, wobei in der ersten Stufe die wäßrige Lösung auf einen pH-Wert zwischen 7,5 und 9 eingestellt wird und die nach Durchführung der Schritte a) - c) erhaltene Lösung in der zweiten Stufe auf einen pH-Wert zwischen 11 und 12,5 eingestellt wird, wonach abermals die Schritte a) - c) durchgeführt werden.

Die Anwendung des Verfahrens als zweistufiges Verfahren bewirkt eine breitbandige Abtrennung der Verunreinigungen, dessen Anwendung dann sinnvoll ist, wenn man nicht genau weiß, welche Verunreinigungen in der Lösung vorhanden sind oder wenn man weiß, daß gewisse Verunreinigungen, insbesondere P, Al, Nb, V oder Ta, in einem nicht zulässigen Maß vorhanden sind.

Bei einer Anwendung des zweistufigen Verfahrens zur Reinigung einer wäßrigen Alkalichromat- und Alkalidichromatlösung wird die wäßrige Lösung in der ersten Stufe auf einen pH-Wert von 8 und in der zweiten Stufe auf einen pH-Wert von 11,5 eingestellt.

Bei einer Anwendung des zweistufigen Verfahrens zur Reinigung einer wäßrigen Alkaliwolframat- oder Ammoniumwolframatlösung einschließlich deren Isopolyanionen sowie zur Reinigung einer Alkalimolybdat- oder Ammoniummolybdatlösung einschließlich deren Isopolyanionen wird die wäßrige Lösung in der ersten Stufe auf einen pH-Wert von 8,5 und in der zweiten Stufe auf einen pH-Wert von 12 eingestellt.

Bei Einstellung dieser pH-Werte wird unter Verwendung von Zellulose Hyphan als faserförmige kationenabsorbierende Substanz die beste Ausbeute bei der Abtrennung der Verunreinigungen erzielt.

Bei einer weiteren vorteilhaften Ausgestaltung des zweistufigen Verfahrens wird in der ersten Stufe der wäßrigen Lösung ein Metallion, welches ein schwerlösliches Hydroxid bildet, zugegeben. Als besonders vorteilhaft hat sich dabei die Zugabe von Indium herausgestellt. Durch diese bewußte Zugabe eines Metallions, das ein schwerlösliches Hydroxid bildet, wird die Bildung der schwerlöslichen Hydroxide der Verunreinigungen beschleunigt und damit das Reinigungsverfahren verkürzt.

Es kann auch beim einstufigen Verfahren vorteilhaft sein, ein derartiges, ein schwerlösliches Hydroxid bildendes Metallion, wie Indium, zuzusetzen. In diesem Fall ist es aber notwendig, die Schritte a) und b) nach Anspruch 1 mindestens einmal zu wiederholen.

Nachfolgend wird die Erfindung anhand von Figuren und Beispielen näher erläutert.

Es zeigen:

Figur 1 das Flußdiagramm eines ein- oder zweistufigen Reinigungsverfahrens entsprechend der Erfindung

Figur 2 das Flußdiagramm für die Aufarbeitung von Molybdän-Rohstoffen

Figur 3 das Flußdiagramm für die Aufarbeitung von Wolfram-Rohstoffen

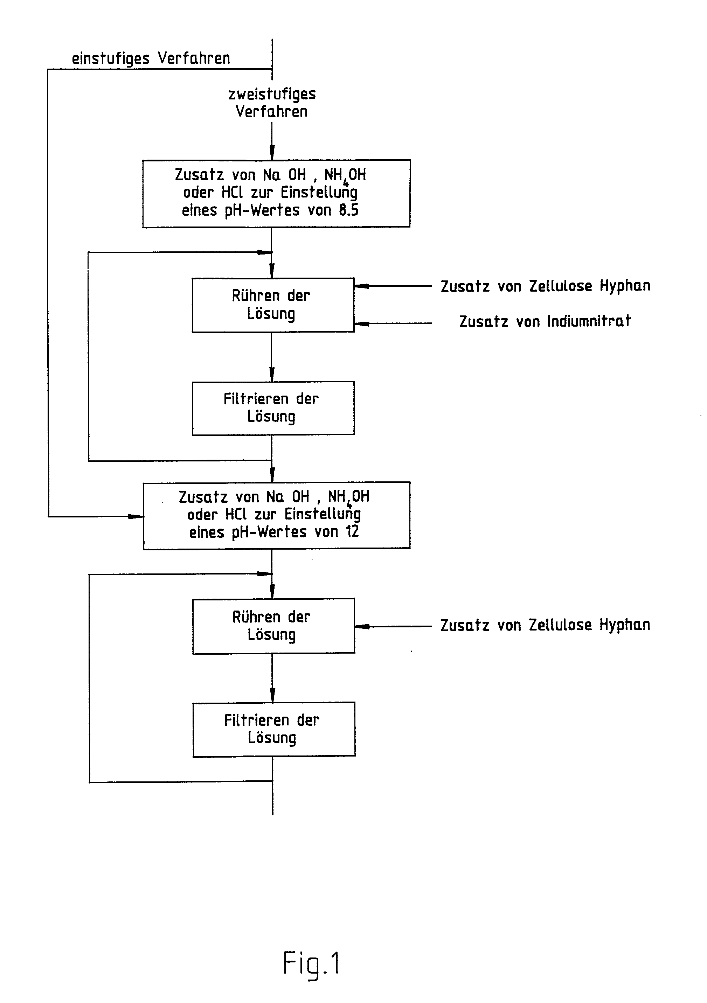

Figur 1 zeigt das Flußdiagramm eines ein- oder zweistufigen Reinigungsverfahrens, abgestimmt auf die Reinigung einer Natriummolybdatlösung, einer Ammoniummolybdatlösung, einer Natriumwolframatlösung oder einer Ammoniumwolframatlösung.

Beim einstufigen Verfahren wird durch Zusatz von NaOH, NH₄OH oder HCl der pH-Wert der zu reinigenden Lösung auf einen Wert von 12 eingestellt. Der pH-Wert, auf den die zu reinigende Lösung eingestellt werden muß, ist abhängig von der faserförmigen kationenabsorbierenden Substanz, die zugesetzt wird und von den Verunreinigungen, die abgetrennt werden sollen. Durch Einstellung eines optimalen pH-Wertes, der im vorliegenden Fall bei der Verwendung von Zellulose Hyphan als faserförmige kationenabsorbierende Substanz bei 12 liegt, wird die maximale Ausbeute bei der Abtrennung der Verunreinigungen erzielt. Eine Reinigung bei pH-Werten, die vom optimalen pH-Wert geringfügig abweichen, ist zwar im Prinzip auch noch möglich. Die Ausbeuten sind dabei aber wesentlich schlechter. Nach Einstellen des pH-Wertes wird der Lösung unter Rühren Zellulose Hyphan als faserförmige kationenabsorbierende Substanz sowie Indiumnitrat zugesetzt. Die Zellulose Hyphan absorbiert und adsorbiert die in der Lösung in kationischer Form und in Form von schwerlöslichen Hydroxiden vorhandenen Verunreinigungen. Der Zusatz von Indiumnitrat beschleunigt die Bildung der schwerlöslichen Hydroxide in der Lösung. Das Rühren wird solange fortgesetzt, bis sich ein Gleichgewicht zwischen der Lösung und der mit ad- und absorbierten Verunreinigungen behafteten Zellulose Hyphan eingestellt hat.

Nachdem sich das Gleichgewicht eingestellt hat, wird die Lösung filtriert und damit die Zellulose Hyphan mit einem Großteil der Verunreinigungen abgetrennt. Die letzten beiden Schritte werden zur Steigerung der Ausbeute der abgetrennten Verunreinigungen gegebenenfalls ein- oder mehrmals wiederholt, wobei es unter Umständen sinnvoll sein kann, bei einer starken Änderung des pH-Wertes der Lösung diesen wiederum auf den ursprünglich eingestellten Wert von 12 neu einzustellen.

Beim zweistufigen Verfahren wird der zweiten Reinigungsstufe, die analog wie beim einstufigen Verfahren abläuft, eine erste Reinigungsstufe vorgeschaltet. In dieser ersten Reinigungsstufe wird die zu reinigende Lösung durch Zusatz von NaOH, NH₄OH oder HCl auf einen pH-Wert von 8,5 eingestellt, wonach die einzelnen Verfahrensschritte analog dem einstufigen Verfahren durchgeführt werden.

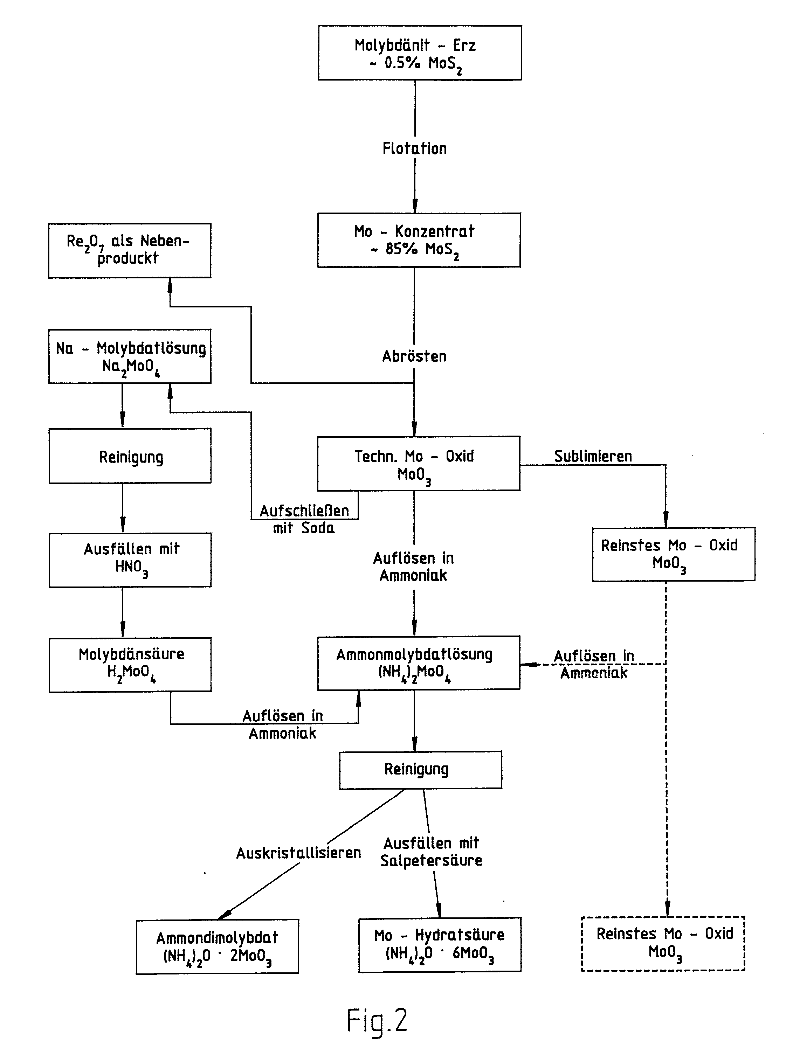

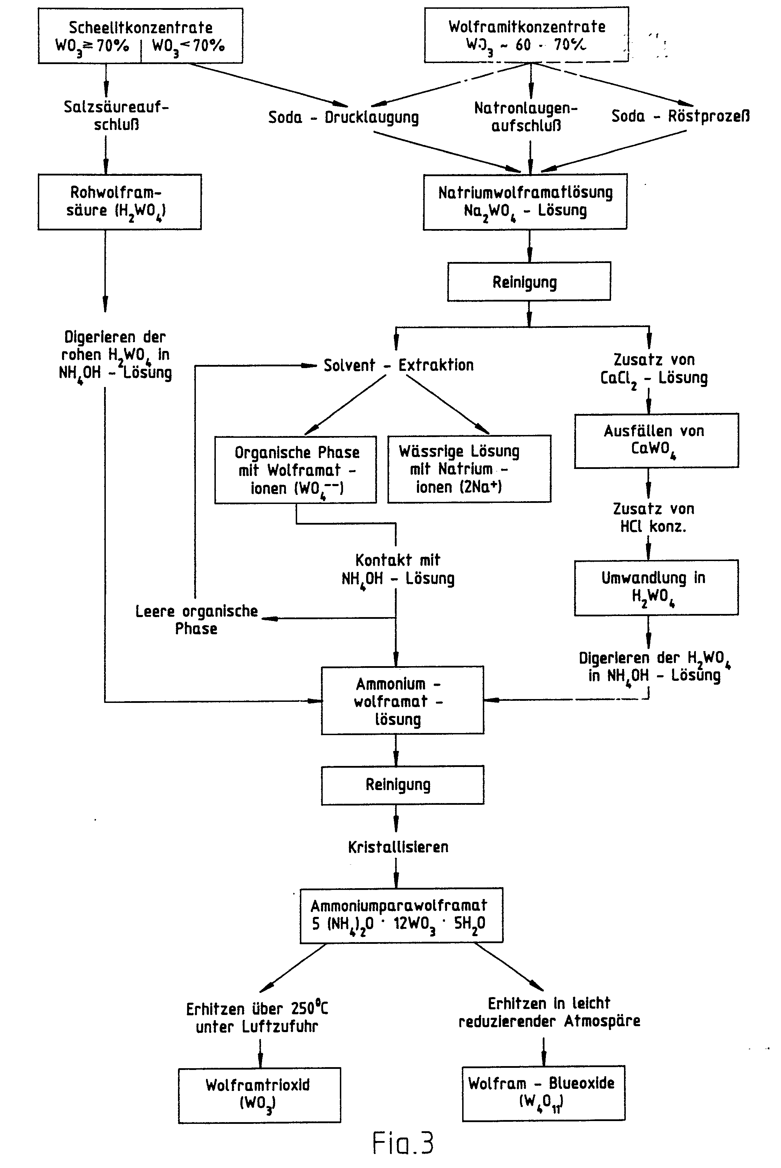

Figur 2 und 3 zeigen anhand von Flußdiagrammen für die Aufbereitung von Molybdän-Rohstoffen und für die Aufbereitung von Wolfram-Rohstoffen an welchen Abschnitten der Aufbereitungsprozesse das erfindungsgemäße Reinigungsverfahren wahlweise zum Einsatz kommen kann.

Beispiel 1

Eine wäßrige Lösung von Natriumwolframat entsprechend 100 g Wolfram, wird mit HCl oder NaOH auf pH 8,5 eingestellt. Zu dieser Lösung wird unter Rühren eine wäßrige Suspension von Zellulose Hyphan zugesetzt. Die Menge wird so bemessen, daß die erhaltene Natriumwolframatlösung 1,5 - 3 g Zellulose je 100 g Wolfram enthält. Nach 30 min. Rühren wird die Lösung mit Indiumnitrat versetzt - so daß ein Gehalt von 1 - 2 Gew.% Indium, bezogen auf die Zellulose, erreicht wird - und weitere 15 min. gerührt. Anschließend wird die verunreinigte Zellulose abfiltriert.

Die erhaltene klare Lösung von Natriumwolframat wird mit NaOH auf einen pH von 12 eingestellt, erneut mit 1,5 - 3 g Zellulose Hyphan je 100 g Wolfram versetzt und weitere 30 - 60 min. gerührt. Nach der Filtration wird der pH-Wert überprüft, die Lösung mit Zellulose Hyphan versetzt, 30 - 60 min. gerührt und filtriert.

Einen Vergleich der Gehalte der Verunreinigungen vor und nach der Reinigung gibt die nachfolgende Tabelle. Alle Werte sind in µg/g (ppm) bezogen auf W angegeben.

4

| Element | vorh. | nachh. | Element | vorh. | nachh. |
|---------|-------|--------|---------|-------|--------|
| Al | 26,5 | 0,5 | Ni | 28,3 | < 0,3 |
| Ba | 27,5 | 0,2 | P | 10,3 | 1,5 |
| Ca | 21,3 | < 0,1 | Sr | 20,5 | 0,65 |
| Co | 10,3 | < 0,1 | Th | 33,1 | < 0,1 |
| Cr | 11,9 | < 0,01 | Ti | 20,3 | 0,2 |
| Cu | 21,8 | < 0,1 | U | 3,5 | < 0,1 |
| Fe | 30,5 | < 0,1 | Zn | 0,3 | < 0,01 |
| Mg | 12,5 | < 0,02 | Zr | 10,3 | < 0,05 |
| Mn | 10,8 | 0,02 | | | |

Beispiel 2

Eine wäßrige Lösung von Natriummolybdat entsprechend 100 g Molybdän, wird mit NaOH auf pH 11,5 eingestellt. Zu dieser Lösung wird unter Rühren eine wäßrige Suspension von Zellulose Hyphan zugesetzt. Die Menge wird so bemessen, daß die erhaltene Natriummolybdatlösung 1,5 - 3 g Zellulose je 100 g Molybdän enthält. Nach 30 min. Rühren wird die Lösung mit Indiumnitrat versetzt - so daß ein Gehalt von 1 - 2 Gew.% Indium, bezogen auf die Zellulose, erreicht wird - und weitere 15 min. gerührt. Anschließend wird die verunreinigte Zellulose abfiltriert.

Die erhaltene klare Lösung von Natriummolybdat wird erneut mit 1,5 - 3 g Zellulose Hyphan je 100 g Molybdän versetzt, weitere 30 - 60 min. gerührt und filtriert.

Einen Vergleich der Gehalte der Verunreinigungen vor und nach der Reinigung gibt die nachfolgende Tabelle. Alle Werte sind in μg/g (ppm) bezogen auf Mo angegeben.

| Element | vorh. | nachh. | Element | vorh. | nachh. |
|---------|-------|--------|---------|-------|--------|
| Ba | 20,3 | 2 | Mn | 13,8 | < 0,01 |
| Ca | 61,3 | 1,5 | Ni | 19,2 | < 0,3 |
| Co | 11,9 | < 0,1 | Sr | 19,8 | < 0,1 |
| Cr | 21,8 | < 0,01 | Ta | 20,3 | 1,8 |
| Cu | 28,4 | 0,6 | Ti | 15,2 | < 0,05 |
| Fe | 315 | < 0,1 | Zn | 0,72 | < 0,01 |
| Mg | 16,5 | < 0,02 | Zr | 47,5 | < 0,1 |

Beispiel 3

Eine wäßrige Lösung von Natriumchromat entsprechend 100 g Chrom, wird mit NaOH auf pH 8,0 eingestellt. Zu dieser Lösung wird unter Rühren eine wäßrige Suspension von Zellulose Hyphan zugesetzt. Die Menge wird so bemessen, daß die erhaltene Natriumchromatlösung 1,5 - 3 g Zellulose je 100 g Chrom enthält. Nach 30 min. Rühren wird die Lösung mit Indiumnitrat versetzt - so daß ein Gehalt von 1 - 2 Gew.% Indium, bezogen auf die Zellulose, erreicht wird - und weitere 15 min. gerührt. Anschließend wird die verunreinigte Zellulose abfiltriert.

Die erhaltene klare Lösung von Natriumchromat wird mit NaOH auf einen pH von 11,5 eingestellt, erneut mit 1,5 - 3 g Zellulose Hyphan je 100 g Chrom versetzt, weitere 30 - 60 min. gerührt und filtriert.

Einen Vergleich der Gehalte der Verunreinigungen vor und nach der Reinigung gibt die nachfolgende Tabelle. Alle Werte sind in μg/g (ppm) bezogen auf Cr angegeben.

| Element | vorh. | nachh. | Element | vorh. | nachh. |
|---------|-------|--------|---------|-------|--------|
| Al | 10 | < 0,5 | Ni | 10 | < 0,03 |
| Ca | 10 | < 0,1 | P | 30 | 2,5 |
| Co | 10 | < 0,1 | Pb | 10 | < 0,5 |
| Cu | 10 | < 0,1 | Th | 10 | < 0,1 |
| Fe | 10 | < 0,1 | Ti | 10 | 0,1 |
| La | 10 | < 0,5 | Zn | 10 | 0,05 |
| Mg | 10 | < 0,02 | Zr | 10 | < 0,05 |
| Mn | 10 | 0,03 | | | |

## Ansprüche

1. Verfahren zur Reinigung einer wäßrigen Alkali- oder Ammoniummetallatlösung, einschließlich deren Isopolyanionen, der Metalle Chrom oder Molybdän oder Wolfram von Verunreinigungen, wobei diese durch Einstellen eines geeigneten pH-Wertes in kationische Form und in Form von schwerlöslichen Hydroxiden gebracht und dann abgetrennt werden,
**dadurch gekennzeichnet,**
daß

a) die verunreinigte Lösung mit einer faserförmigen kationenabsorbierenden Substanz versetzt und bis zur Einstellung des Gleichgewichtszustandes gerührt wird,

b) die Lösung zur Abscheidung der mit den Verunreinigungen behafteten festen Substanz filtriert wird

c) wahlweise die Schritte a) und b) ein- oder mehrmals wiederholt werden.

2. Verfahren zur Reinigung einer wäßrigen Alkali- oder Ammoniummetallatlösung, einschließlich deren Isopolyanionen, der Metalle Chrom oder Molybdän oder Wolfram nach Anspruch 1, dadurch gekennzeichnet, daß als faserförmige kationenabsorbierende Substanz Zellulose mit chelatbildenden Gruppen verwendet wird und daß die wäßrige Lösung auf einen pH-Wert zwischen 10 und 12,5 eingestellt wird.

3. Verfahren zur Reinigung einer wäßrigen Alkali- oder Ammoniummetallatlösung, einschließlich deren Isopolyanionen, der Metalle Chrom oder Molybdän oder Wolfram nach Anspruch 2, dadurch gekennzeichnet, daß das Verfahren in einer Stufe durchgeführt wird, wobei die wäßrige Lösung auf einen pH-Wert zwischen 10 und 12,5 eingestellt wird und der eingestellte pH-Wert auch im Schritt c) aufrechterhalten wird.

4. Verfahren zur Reinigung einer wäßrigen Alkali- oder Ammoniummetallatlösung, einschließlich deren Isopolyanionen, der Metalle Chrom oder Molybdän oder Wolfram nach Anspruch 2, dadurch gekennzeichnet, daß das Verfahren in zwei Stufen durchgeführt wird, wobei in der ersten Stufe die wäßrige Lösung auf einen pH-Wert zwischen 7,5 und 9 eingestellt wird und die nach Durchführung der Schritte a) - c) erhaltene Lösung in der zweiten Stufe auf einen pH-Wert zwischen 11 und 12,5 eingestellt wird, wonach abermals die Schritte a) - c) durchgeführt werden.

5. Verfahren zur Reinigung einer wäßrigen Alkalichromat- und Alkalidichromatlösung, nach Anspruch 4, dadurch gekennzeichnet, daß die wäßrige Lösung in der ersten Stufe auf einen pH-Wert von 8 und in der zweiten Stufe auf einen pH-Wert von 11,5 eingestellt wird.

6. Verfahren zur Reinigung einer wäßrigen Alkaliwolframat- oder Ammoniumwolframatlösung, einschließlich deren Isopolyanionen, nach Anspruch 4, dadurch gekennzeichnet, daß die wäßrige Lösung in der ersten Stufe auf einen pH-Wert von 8,5 und in der zweiten Stufe auf einen pH-Wert von 12 eingestellt wird.

7. Verfahren zur Reinigung einer wäßrigen Alkalimolybdat- oder Ammoniummolybdatlösung, einschließlich deren Isopolyanionen, nach Anspruch 4, dadurch gekennzeichnet, daß die wäßrige Lösung in der ersten Stufe auf einen pH-Wert von 8,5 und in der zweiten Stufe auf einen pH-Wert von 12 eingestellt wird.

8. Verfahren zur Reinigung einer wäßrigen Alkali- oder Ammoniummetallatlösung, einschließlich deren Isopolyanionen, der Metalle Chrom oder Molybdän oder Wolfram nach einem der Ansprüche 4 bis 6, dadurch gekennzeichnet, daß in der ersten Stufe der wäßrigen Lösung eine geringfügige Menge von Metallionen zugegeben wird, welche ein schwerlösliches Hydroxid bilden.

9. Verfahren zur Reinigung einer wäßrigen Alkali- oder Ammoniummetallatlösung, einschließlich deren Isopolyanionen, der Metalle Chrom oder Molybdän oder Wolfram nach Anspruch 8, dadurch gekennzeichnet, daß als Metallionen Indium, mit einem Anteil von 1 - 2 Gew.%, bezogen auf die Zellulose, zugegeben werden.

6

einstufiges Verfahren

zweistufiges
Verfahren

Zusatz von Na OH , NH$_4$OH
oder HCl zur Einstellung
eines pH-Wertes von 8.5

Rühren der
Lösung — Zusatz von Zellulose Hyphan

— Zusatz von Indiumnitrat

Filtrieren der
Lösung

Zusatz von Na OH , NH$_4$OH
oder HCl zur Einstellung
eines pH-Wertes von 12

Rühren der
Lösung — Zusatz von Zellulose Hyphan

Filtrieren der
Lösung

Fig.1

Fig.2

EP 0 368 380 A1

```
┌─────────────────────────┐          ┌─────────────────────────┐
│   Scheelitkonzentrate   │          │   Wolframitkonzentrate  │
│  WO₃ ≥ 70% │ WO₃ < 70%  │          │    WO₃ ~ 60 - 70%       │
└─────────────────────────┘          └─────────────────────────┘
```

$$Scheelitkonzentrate \quad WO_3 \geq 70\% \mid WO_3 < 70\%$$

$$Wolframitkonzentrate \quad WO_3 \sim 60 - 70\%$$

Salzsäureaufschluß

Soda - Drucklaugung

Natronlaugenaufschluß

Soda - Röstprozeß

Rohwolframsäure ($H_2WO_4$)

Natriumwolframatlösung $Na_2WO_4$ - Lösung

Reinigung

Digerieren der rohen $H_2WO_4$ in $NH_4OH$ - Lösung

Solvent - Extraktion

Zusatz von $CaCl_2$ - Lösung

Organische Phase mit Wolframat - ionen ($WO_4^{--}$)

Wässrige Lösung mit Natrium - ionen ($2Na^+$)

Ausfällen von $CaWO_4$

Kontakt mit $NH_4OH$ - Lösung

Zusatz von HCl konz.

Leere organische Phase

Umwandlung in $H_2WO_4$

Ammonium - wolframat - lösung

Digerieren der $H_2WO_4$ in $NH_4OH$ - Lösung

Reinigung

Kristallisieren

Ammoniumparawolframat $5 (NH_4)_2O \cdot 12WO_3 \cdot 5H_2O$

Erhitzen über 250°C unter Luftzufuhr

Erhitzen in leicht reduzierender Atmospäre

Wolframtrioxid ($WO_3$)

Wolfram - Blueoxide ($W_4O_{11}$)

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 596 701  (M.J. CHERESNOWSKY et al.)<br>* Spalte 2, Zeilen 17-27; Spalte 4, Zeile 59 - Spalte 5, Zeile 9 *<br>--- | 1 | C 01 G  37/00<br>C 01 G  39/00<br>C 01 G  41/00 |
| A | CHEMICAL ABSTRACTS<br>Band 76, Nr. 8, 21. Februar 1972, Seite 137, Zusammenfassung Nr. 36341v, Columbus, Ohio, USA; A.G. KHOLMOGOROV et al.: "Possible use of ion exchange fibers in technology of molybdenum and tungsten production" & Ref. Zh. Met. 1971, Zusammenfassung no. 6G239<br>--- | 1 | |
| A | CHEMICAL ABSTRACTS<br>Band 76, Nr. 2, 10. Januar 1972, Seite 420, Zusammenfassung Nr. 9889y, Columbus, Ohio, USA; S. STEINBACH et al.: "Ion exchangers with complex-forming anchor groups. 40. Removal of trace metals from molybdenum and tungsten with chelate-forming ion-exchangers" & Z. Chem. 1971, Band 11, Nr. 9, Seiten 350,351<br>--- | 1 | RECHERCHIERTE SACHGEBIETE (Int. Cl.5)<br><br>C 01 G  37/00<br>C 01 G  39/00<br>C 01 G  41/00 |
| A | CHEMICAL ABSTRACTS<br>Band 96, Nr. 10, 8. März 1982, Seite 703, Zusammenfassung Nr. 78991a, Columbus, Ohio, USA; M. FOERSTER et al.: "Separation of traces of heavy metals from concentrated salt solutions using chelating cellulose exchangers" & Fresenius' Z. Anal. Chem. 1981, Band 309, Nr. 3, Seiten 177-180<br>---                                    -/- | 1 | |

Der vorliegende Recherchenbericht wurde für alle Patentansprüche erstellt

| Recherchenort | Abschlußdatum der Recherche | Prüfer |
|---|---|---|
| BERLIN | 05-02-1990 | CLEMENT J.P. |

Europäisches
Patentamt

Nummer der Anmeldung

EP 89 20 2680

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS Band 97, Nr. 6, 9. August 1982, Seite 649, Zusammenfassung Nr. 48770f, Columbus, Ohio, USA; K. GOLDBACH et al.: "Separation of toxic heavy metals from solutions using chelating cellulose exchangers" & Fresenius' Z. Anal. Chem. 1982, Band 311, Nr. 3, Seiten 183-186 --- | 1 | |
| A | CHEMICAL ABSTRACTS Band 92, Nr. 13, 31. März 1980, Seite 337, Zusammenfassung Nr. 116170j, Columbus, Ohio, USA; P.BURBA et al.: "Separation of uranium from natural waters by the cellulose exchanger Hyphan"; & Fresenius' Z. Anal. Chem. 1979, Band 298, Nr. 5, Seiten 373-377 --- | 1 | |
| A | US-A-3 957 946 (R.A. RONZIO et al.) * Spalte 6, Zeilen 33-67 *; & DE - A - 2 558 160 (Kat. D) ----- | 1 | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| BERLIN | 05-02-1990 | CLEMENT J.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes Dokument

EPO FORM 1503 03.82 (P0403)